# EUROPÄISCHE PATENTSCHRIFT

(11) **EP 4 094 005 B1**
(45) Veröffentlichungstag und Bekanntmachung des Hinweises auf die Patenterteilung: **31.07.2024**
(21) Anmeldenummer: 21701095.8
(22) Anmeldetag: 18.01.2021
(51) Int. Cl.: F16L 55/045, F16K 47/02, F16K 47/08

(54) **DRUCKSTOSSBEGRENZER**
PRESSURE SURGE LIMITER
LIMITEUR DE SURPRESSION

(30) Priorität: 23.01.2020 DE 102020000385
(43) Veröffentlichungstag der Anmeldung: 30.11.2022
(73) Patentinhaber: Messer GasPack GmbH, 47803 Krefeld (DE)
(72) Erfinder: KRIESE, Alexander, 2500 Baden bei Wien (AT)
(74) Vertreter: Münzel, Joachim R.
(86) Internationale Anmeldenummer: PCT/EP2021/050954
(87) Internationale Veröffentlichungsnummer: WO 2021/148353

(56) Entgegenhaltungen:
- EP-A1- 3 051 192
- CH-A- 261 459
- DE-A1- 3 625 566
- KR-A- 20000 067 699

## Beschreibung

Die Erfindung betrifft eine Vorrichtung zum Begrenzen von Druckstößen in einem fluidführenden Rohrleitungssystem.

Für eine Vielzahl an Anwendungen der Industrie sind Vorrichtungen erforderlich, die in fluidführenden Rohrleitungssystemen und damit verbundenen Einrichtungen einen schnellen Druckanstieg über vordefinierte Werte verhindern. Die Auslösung einer solchen Vorrichtung erfolgt automatisch. Bei Auftreten eine Druckstoßes an der Vorrichtung wird der Strömungsdurchfluss zum abströmseitigen Teil des Rohrleitungssystems ganz oder teilweise gesperrt, oder es wird ein Teil des mit dem Druckstoß eintreffenden Fluids über einen Entlastungskanal abgeführt, wodurch der Druckanstieg im stromabwärtigen Teil des Rohrleitungssystems reduziert wird.

Häufig kommen dabei sogenannte federbelastete Systeme zum Einsatz, bei denen im normalen Betriebszustand der zum stromabwärtigen Teil des Rohrleitungssystems führende Strömungsweg offen und/oder ein Entlastungskanal geschlossen ist und ein mit einer Feder ausgerüsteter Mechanismus dafür sorgt, dass ein plötzlich auftretender Druckstoß eine gegen die Federkraft gerichtete Kraft ausübt mit der Folge, dass der Strömungsweg ganz oder teilweise geschlossen bzw. der Entlastungskanal geöffnet wird. Nach Abklingen des Druckstoßes kehrt das System in seine Ausgangslage zurück. Systeme dieser Art werden für verschiedene fluidführende Systeme beispielsweise in der US 4172468 B1, der WO 89/02557 A1 oder der EP 1 214 539 A1 beschrieben.

Derartige federbelastete Systeme haben allerdings den Nachteil, dass deren Trägheit in vielen Fällen bei sehr schnellen Druckanstiegen zu hoch ist. Außerdem wird bei diesen Systemen häufig das Fluid freigesetzt oder muss in Auffangbehälter geleitet werden. Weiterhin müssen bei bestimmten Fluiden, insbesondere bei hochreaktiven oder -korrosiven Fluiden, wie beispielsweise Sauerstoff, besondere Anforderungen erfüllt sein. Beispielsweise müssen die Vorrichtungen aus hochwertigen Materialien aufgebaut sein und/oder es müssen zusätzliche konstruktive Vorkehrungen getroffen sein, um eine einwandfreie Funktionsfähigkeit der Vorrichtung zu gewährleisten. Dies führt zu erheblichen Kosten bei der Fertigung dieser Systeme.

Aus der EP 3 051 192 A1 ist ein Fluidventil zur Verhinderung von Druck- oder Saugstößen bekannt, das gänzlich ohne eine Federmechanik auskommt. Bei diesem System befindet sich innerhalb einer Fluidleitung im Ventil ein kugelförmiger Dichtkörper, der in einem druckstoß- und saugstoßfreien Betriebszustand eine Freigabestellung einnimmt und eine bidirektionale Fluidströmung durch die Fluidleitung ermöglicht, im Falle eines entsprechenden Stoßes jedoch die Fluidleitung anström- bzw. abströmseitig verschließt und den Fluidfluss damit unterbricht. Nachteilig bei diesem System ist allerdings die in vielen Fällen unerwünschte völlige und abrupte Unterbrechung des Fluidflusses.

Der Erfindung liegt daher die Aufgabe zu Grunde, eine effizient arbeitende und einfach aufgebaute Vorrichtung zur Begrenzung von Druckstößen in fluidführenden Systemen zu schaffen, bei der eine völlige Unterbrechung des Fluidflusses vermieden wird.

Gelöst ist diese Aufgabe durch eine Vorrichtung mit den Merkmalen des Patentanspruchs 1.

Eine erfindungsgemäße Vorrichtung zum Begrenzen von Druckstößen in einem fluidführenden Rohrleitungssystem weist also eine mit einer Anströmöffnung und einer Abströmöffnung für das Fluid strömungsverbundene Haltekammer auf, innerhalb der eine Mehrzahl an Dichtkörpern lose aufgenommen ist, die Dichtkörper also innerhalb der Haltekammer frei beweglich sind. Die Haltekammer wird von zwei Halteelementen begrenzt, von denen ein - in Strömungsrichtung gesehen vorderes - erstes Halteelement im Bereich der Anströmöffnung und ein - in Strömungsrichtung gesehen hinteres - zweites Halteelement im Bereich der Abströmöffnung angeordnet ist. Erstes und zweites Halteelement sind so aufgebaut, dass sie für das Fluid durchlässig, für die Dichtkörper dagegen undurchlässig sind.

Als "Fluid" soll hier eine gasförmige oder flüssige Substanz oder ein pneumatisch geführtes Schüttgut verstanden werden, bei dem ein Transport durch eine Rohrleitung möglich ist. Insbesondere handelt es sich im vorliegenden Fall um Gase oder Gasgemische oder um verflüssigte, insbesondere tiefkalt verflüssigte Gase.

Als "Druckstoß" soll hier ein Anstieg des Drucks in dem durch das Rohrleitungssystem geführten Fluid verstanden werden, dessen Geschwindigkeit und/oder Höhe einen vordefinierten Wert übersteigt. Hierbei sind zwei Szenarien zu unterscheiden:
a) Auf der Anströmseite tritt eine anhaltende, nicht zulässige Druckerhöhung auf. Diese würde z.B. in nachgeordneten Toträumen eine Kompression des Fluids bewirken. Sofern es sich bei dem Fluid um ein Gas handelt, wird in der Technik für diesen Effekt der Begriff der adiabaten Kompression verwendet. Mittels der erfindungsgemäßen Vorrichtung wird die Zeitdauer des Druckaufbaus im abströmseitigen Teil des Rohrleitungssystems gegenüber der Anströmseite gestreckt. Dadurch wird der Druckverlauf insgesamt geglättet, und in der anströmseitigen Strömung etwaig vorhandene Druckspitzen werden reduziert. Es hat sich gezeigt, dass in vielen Fällen gerade ein kurzer Druckstoß zu erheblichen Problemen im Rohrleitungssystem bzw. daran angeschlossenen Armaturen führt. Beispielsweise führt ein Druckstoß in kompressiblen Fluiden, wie er etwa bei einem raschen Öffnen eines Druckgasflaschenventils auftritt, in bestimmten Armaturen zu einer adiabatischen Kompression des Fluids. Die Kompression ist mit einem Temperaturanstieg verbunden, der bei hochreaktiven Fluiden, wie beispielsweise Sauerstoff, im Extremfall zu einem Ausbrand der Armatur führen kann. Die dabei erreichbare maximale Temperatur hängt jedoch aufgrund der Fähigkeit der Armatur, Wärme abzuleiten, sehr stark von der Zeitdauer des Druckaufbaus ab. Mittels der erfindungsgemäßen Vorrichtung wird die Zeitdauer des Druckaufbaus um beispielsweise einen Faktor 100 bis 1000 gestreckt und damit das Erreichen eines zu hohen Temperaturwertes in der Armatur verhindert;
b) Auf der Anströmseite tritt eine kurzzeitige nicht zulässige Druckerhöhung von beispielsweise einigen Sekunden auf, danach fällt der Druck wieder in den zulässigen Bereich. Mittels der erfindungsgemäßen Vorrichtung wird die Zeitdauer des Druckaufbaus im abströmseitigen Teil des Rohrleitungssystems gegenüber der Anströmseite gestreckt. Dadurch wird der Druckverlauf insgesamt geglättet, und die vor der erfindungsgemäßen Vorrichtung auftretende Druckspitze wird nur in reduzierter Form auf die Abströmseite übertragen. Die Stärke dieser Reduzierung kann insbesondere durch die Formgebung der Vorrichtung und der Art der darin enthaltenen Dichtungskörper auf den jeweiligen Anwendungsfall angepasst werden.

Bei den Haltelementen handelt es sich um in der Vorrichtung installierte Bauteile, die eine oder mehrere Strömungsöffnungen für das Fluid aufweisen, wobei der Querschnitt oder die Querschnitte dieser Strömungsöffnung/en so gewählt ist/sind, dass die in der Haltekammer befindlichen Dichtkörper nicht hindurchdringen können. Beispielsweise handelt es sich beim Halteelement um ein Sieb, ein Netz, ein Gitter oder ein Sinterfilter aus einem den jeweiligen Anforderungen angepassten Material, wie beispielsweise Metall oder Kunststoff.

Bei den Dichtkörpern handelt es sich um Bauteile, die so aufgebaut sind, dass sie durch einen Druckstoß im Rohrleitungssystem in Bewegung gesetzt werden können und nicht miteinander verhaken oder in sonstiger Weise eine dauerhafte Verbindung miteinander oder mit den Halteelementen eingehen. Beispielsweise handelt es sich bei den Dichtkörpern um Teile aus Metall, wie Kupfer, Messing oder Monell, aus Kunststoff, Glas, Keramik oder aus mineralischen Stoffen, die eine große Härte aufweisen und in Bezug auf das zu transportierende Fluid inert sind.

Die Dichtkörper müssen nicht zwingend eine einheitliche Geometrie oder Größe aufweisen, wenngleich dies im Rahmen der Erfindung bevorzugt ist. Die Mindestgröße der Dichtkörper muss jedoch größer als der Durchmesser der Strömungsöffnungen in den Halteelementen sein, um sicherzustellen, dass die Dichtkörper im Betrieb der Vorrichtung nicht aus der Haltekammer hinausgelangen können. Die Größe und Anzahl der Dichtkörper hängt von den jeweiligen Erfordernissen ab; beispielsweise weist eine erfindungsgemäße Vorrichtung zwischen 20 und 1000 oder mehr Dichtkörper auf.

In einer zweckmäßigen Ausgestaltung sind die Dichtkörper rotationssymmetrisch aufgebaut, und beispielsweise kugelförmig, zylindrisch oder ringförmig. In einer anderen vorteilhaften Ausgestaltung sind die Dichtkörper unregelmäßig geformt; beispielsweise werden die Dichtkörper durch Körner eines Granulats oder durch kleinteilige Partikel streufähiger Materialien gebildet, wie etwa Kochsalz oder Sand.

Größe und/oder Geometrie des ersten Halteelements und/oder der Dichtkörper sind dabei so zu wählen, dass im regulären Betriebszustand, d.h. bei einem gleichmäßigen Zustrom von Fluid, der Fluiddurchfluss durch die Vorrichtung möglichst wenig gestört ist. Beispielsweise weist das erste Halteelement eine große Fläche auf und die Dichtkörper befinden sich in einer losen Anordnung auf oder in der Nähe des ersten Halteelements. Kommt es zu einem Druckstoß in Richtung der regulären Strömungsrichtung, werden die Dichtkörper in Richtung des zweiten Halteelements geschleudert und lagern sich gegen die Wirkung der Schwerkraft an dieser an. Die Größe und/oder die Geometrie des zweiten Halteelements sind so zu wählen, dass das zweite Halteelement in Verbindung mit den Dichtkörpern einen Strömungswiderstand ausbildet mit der Folge, dass der Druckstoß im dazu abströmseitigen Teil des Rohrleitungssystems bzw. den dort an die Rohrleitung angeschlossenen Systemen zur Vorrichtung zumindest abgemildert wird, ohne jedoch den Fluiddurchfluss vollständig zu unterbrechen. Beispielsweise weist das zweite Halteelement eine so kleine Fläche auf, dass die Dichtkörper nach einem Druckstoß kurzzeitig eine mehrlagige Packung am zweiten Halteelement ausbilden. Da die erfindungsgemäße Vorrichtung weiterhin den Durchfluss von Fluid erlaubt, wird nach Abklingen des Druckstoßes die noch vorhandene Druckdifferenz an beiden Seiten der der Vorrichtung rasch abgebaut und die Dichtkörper kehren unter der Wirkung der Schwerkraft selbsttätig in ihre Ausgangsposition zurück.

Bevorzugt ist die Haltekammer so aufgebaut, dass das erste Halteelement eine größere Querschnittsfläche als das zweite Halteelement aufweist und sich die Haltekammer zwischen erstem und zweitem Halteelement verjüngt, beispielsweise konisch verjüngt. Die Größe des ersten Halteelements ist dabei so bemessen, dass das Durchfließen des Fluids auch dann weitgehend ungehindert möglich ist, wenn sich alle oder die meisten der Dichtkörper unmittelbar auf oder am ersten Halteelement befinden. Das zweite Haltelement ist dagegen so bemessen, dass sich bei einem Druckstoß eine bevorzugt mehrlagige Packung von Dichtkörpern vor dem zweiten Halteelement aufbaut.

Eine besonders bevorzugten Ausgestaltung der Erfindung sieht eine im Wesentlichen vertikale Ausrichtung der Vorrichtung vor. Die Haltekammer ist also in einem aufwärts gerichteten Abschnitt eines zwischen Anströmöffnung und Abströmöffnung verlaufenden Strömungsweges angeordnet und das zweite Halteelement befindet sich geodätisch gesehen oberhalb des ersten Haltelements. Im regulären Betriebszustand liegen die Dichtkörper auf dem ersten Halteelement auf. Im Falle eines Druckstoßes werden sie von dort nach oben gegen das zweite Halteelement geschleudert und bilden von dem zweiten Halteelement eine strömungsmindernde Packung aus. Nach Abklingen des Druckstoßes und dem Ausgleich der Druckdifferenz vor und hinter der Vorrichtung fallen die Dichtkörper unter der Wirkung der Schwerkraft selbsttätig in ihre Ausgangsposition zurück. Insbesondere bei dieser Ausgestaltung ist es vorteilhaft, wenn sich der Strömungsquerschnitt vom ersten Halteelement zum zweiten Halteelement hin reduziert und die Fläche des ersten Haltelements größer als die des zweiten Halteelements ist. Beispielsweise besitzt die Haltekammer eine sich vom ersten Halteelement zum zweiten Halteelement hin verjüngende, insbesondere konisch verjüngende, Gestalt. Im regulären Betriebszustand verteilen sich die Dichtkörper breit auf der Fläche des ersten Halteelements und hindern den Fluiddurchfluss nur geringfügig. Im Falle eines Druckstoßes bilden die Dichtkörper dagegen eine vergleichsweise dichte, jedoch immer noch fluiddurchlässige Packung vor dem zweiten Halteelement.

In einer anderen Ausgestaltung ist die Vorrichtung im Wesentlichen horizontal angeordnet, d.h. die Haltekammer bildet in einem im Wesentlichen horizontal verlaufenden Abschnitt eines zwischen Anströmöffnung und Abströmöffnung verlaufenden Strömungsweges. Bei dieser Ausgestaltung ist freilich darauf zu achten, dass die Dichtkörper nach Abklingen des Druckstoßes selbsttätig in ihre Ausgangslage zurückkehren. Dies wird beispielsweise dadurch ermöglicht, dass der Strömungsweg insgesamt oder ein Bodenabschnitt der Haltekammer zwischen dem ersten und dem zweiten Halteelement leicht aufwärts gerichtet ist, sodass sich die Dichtkörper bei Fehlen eines Druckstoßes unter der Wirkung der Schwerkraft im Bereich des ersten Haltelements sammeln. Beispielsweise ist die Haltekammer zumindest abschnittsweise als ein horizontal angeordneter, sich in Richtung des zweiten Haltelements verjüngender Konus ausgebildet.

Masse und Geometrie (bei Kugeln: der oder die Durchmesser) der Dichtkörper sind bevorzugt so gewählt, dass sie bei einer regulären, d.h. ohne Druckstoß erfolgenden Strömung von Fluid durch die Haltekammer maximal an der Grenze zu einem Schwebezustand sind. Bei dieser Ausgestaltung genügt auch ein geringer Druckstoß, um die Dichtkörper gegen das zweite Halteelement zu schleudern, wodurch eine rasch wirkende Druckstoßbegrenzung gewährleistet wird.

In einer bevorzugten Ausgestaltung der Erfindung ist die erfindungsgemäße Vorrichtung lösbar mit dem Rohrleitungssystem verbunden, es handelt sich also um eine eigenständige Einrichtung mit einem Gehäuse, das über geeignete Verbindungselemente, beispielsweise eine im Bereich der Anströmöffnung und der Abströmöffnung angeordnete Schraub- oder Flanschverbindung, lösbar mit den übrigen Teilen des Rohrleitungssystems verbunden ist.

Bevorzugt handelt es sich bei der erfindungsgemäßen Vorrichtung um einen integralen Bestandteil einer Armatur, insbesondere eines Ventils, etwa eines Druckreduzierventils. Die erfindungsgemäße Vorrichtung ist besonders für die Verwendung in Rohrleitungssystemen für kompressible Fluide geeignet, insbesondere für Rohrleitungssysteme, die zum Transport von hochkorrosiven oder hochreaktiven Gasen, wie beispielsweise Sauerstoff, bestimmt sind.

Anhand der Zeichnungen sollen Ausführungsbeispiele der Erfindung näher erläutert werden. In schematischen Ansichten zeigen:
- Fig. 1:: eine erfindungsgemäße Vorrichtung in einer ersten Ausführungsform in ihrem regulären Betriebszustand im Längsschnitt,
- Fig. 2:: die Vorrichtung aus Fig. 1 unmittelbar nach einem Druckstoß,
- Fig. 3:: eine erfindungsgemäße Vorrichtung in einer anderen Ausführungsform in ihrem regulären Betriebszustand im Längsschnitt.

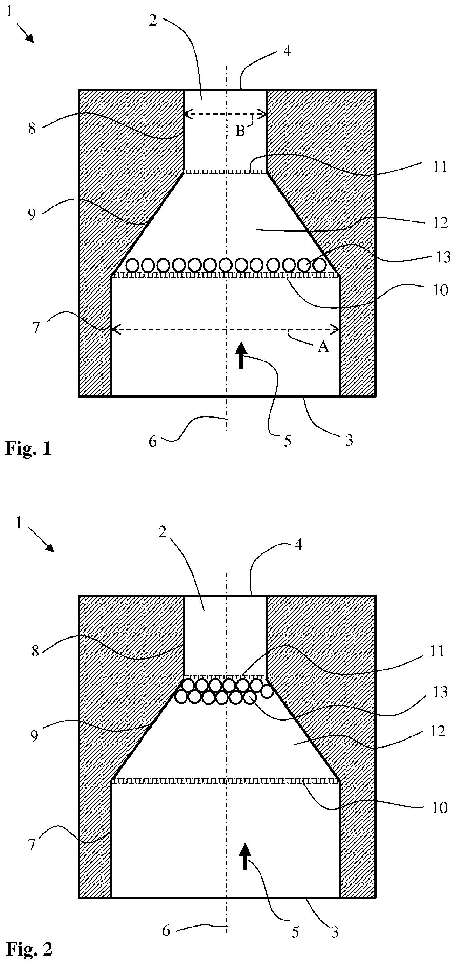

Die in den Fig. 1 und 2 gezeigte Vorrichtung 1 ist Teil eines hier im Übrigen nicht gezeigten Rohrleitungssystems, das zum Fördern eines Fluids, im Ausführungsbeispiel eines Gases, wie beispielsweise Sauerstoff, bestimmt ist. Die Vorrichtung 1 ist dabei beispielsweise als eigenständige Armatur in das Rohrleitungssystem integriert und lösbar, beispielsweise über eine Flanschverbindung, mit anderen Teilen oder Leitungsabschnitten des Rohrleitungssystems verbunden.

Durch die im Betriebszustand vertikal angeordnete Vorrichtung 1 hindurch verläuft ein Strömungsweg 2 von einer Anströmöffnung 3 zu einer Abströmöffnung 4, durch den das Fluid in Richtung des Pfeils 5 von unten nach oben geführt wird. Der im Ausführungsbeispiel rohrförmige, um eine Achse 6 drehsymmetrisch angelegte Strömungsweg 2 umfasst einen unteren Abschnitt 7 mit einem vergleichsweise großen Leitungsquerschnitt A und einen oberen Abschnitt 8 mit einem im Vergleich zum unteren Abschnitt 7 kleineren Leitungsquerschnitt B. B definiert dabei einen für die Funktionsfähigkeit des Rohrleitungssystems erforderlichen Mindestquerschnitt des Strömungswegs 2. Die Abschnitte A und B sind durch einen im Ausführungsbeispiel konisch zugeformten Übergangsabschnitt 9 miteinander verbunden, längs dessen sich der Leitungsquerschnitt des Strömungsweges 2 von A auf B verkleinert.

Im Bereich des unteren Abschnitts 7 ist, angrenzend an den Übergangsabschnitt 9, ein erstes Halteelement 10 angeordnet. Dabei handelt es sich um eine fest mit dem Abschnitt 7 verbundene, horizontal angeordnete sieb- oder gitterartige oder in sonstiger Weise mit Strömungsöffnungen ausgerüstete Struktur, die im Wesentlichen den gesamten Querschnitt A des unteren Abschnitts 7 ausfüllt, jedoch den Fluidfluss durch den Strömungsweg 2 nicht oder nur unwesentlich behindert. Im Bereich des oberen Abschnitts 8 ist, angrenzend zum Übergangsabschnitt 9, ein zweites Halteelement 11 angeordnet, das in ähnlicher Weise sieb- oder gitterartig aufgebaut ist und sich im oberen Abschnitt 8 horizontal erstreckt, wobei auch dieses Halteelement 11 den Fluidfluss nicht oder nur unwesentlich beeinträchtigt. Beispielsweise handelt es sich bei den Halteelementen 10, 11 um fest im jeweiligen Abschnitt 7, 8 montierte, starre Siebe oder Sinterfilter aus Metall.

Die Halteelemente 10, 11 begrenzen im Strömungsweg 2 eine Haltekammer 12 zum Aufnehmen einer Mehrzahl von Dichtkörpern 13. Im Ausführungsbeispiel ist die Haltekammer 12 mit dem Übergangsabschnitt 9 identisch, was indes im Rahmen der Erfindung nicht zwingend erforderlich ist. Bei den Dichtkörpern 13 handelt es sich im Ausführungsbeispiel um Kugeln aus Metall oder Kunststoff, die innerhalb der Haltekammer 12 frei beweglich aufgenommen sind. Die kugelförmigen Dichtkörper 13 können dabei einen einheitlichen Durchmesser oder unterschiedliche Durchmesser aufweisen, sind jedoch zumindest so groß, dass sie nicht durch die Strömungsöffnungen der Haltelemente 10, 11 hindurchpassen, sondern von diesen in der Haltekammer 12 zurückgehalten werden. Im Übrigen muss es sich bei den Dichtkörpern 13 nicht zwingend um Kugeln handeln, auch andere, beispielsweise andere rotationssymmetrische oder auch unregelmäßig geformte Körper sind im Rahmen der Erfindung vorstellbar, sofern sich die Dichtkörper 13 nicht miteinander oder mit einem Halteelement 10, 11 zu einer den Fluidfluss völlig blockierenden Sperre verbinden können.

Im Ruhezustand der Vorrichtung 1, in dem kein Fluid durch den Strömungsweg 2 fließt, liegen die Dichtkörper 13 nebeneinander auf dem ersten Halteelement 10 auf, wie in Fig. 1 gezeigt.

In einem regulären Betriebszustand strömt Fluid gleichmäßig in Richtung des Pfeils 5 an den Dichtkörpern 13 vorbei durch den Strömungsweg 2. Aufgrund ihrer kugeligen Gestalt hindern die Dichtkörper 13 nicht das Durchströmen von Fluid durch das Halteelement 10.

Allerdings sind der Leitungsquerschnitt A und/oder die Durchmesser der Dichtkörper 13 so gewählt, dass der von den auf dem Halteelement 10 aufliegenden Dichtkörpern 13 resultierende Strömungswiderstand nicht die Funktionsfähigkeit des Rohrleitungssystems beeinträchtigt. Weiterhin sind Masse und Durchmesser der Dichtkörper so gewählt, dass der normale Strömungsdruck des Fluids im regulären Betriebszustand nicht ausreicht, um die Dichtkörper 13 gegen das zweite Haltelement 11 zu drücken. Beispielsweise befinden sich bei normalem Strömungsdruck des Fluids die Dichtkörper 13 annähernd an der Grenze zum Schweben, sie liegen also gerade noch auf dem ersten Halteelement 10 auf und/oder hüpfen gelegentlich von diesem auf.

Kommt es zu einem plötzlichen Druckstoß im Fluid, werden die Dichtkörper 13 in der Haltekammer 12 unter der Wirkung des Druckstoßes nach oben geschleudert und legen sich in einer dichten Packung an das zweite Halteelement 11 an, wie in Fig. 2 gezeigt. Aufgrund des dort geringeren Leitungsquerschnitts führt diese dichte Packung von Dichtkörpern 13 dort zu einem erheblichen Strömungswiderstand, der die Wirkung des Druckstoßes in dem zur Vorrichtung 1 abströmseitigen Teil des Rohrleitungssystems erheblich reduziert, ohne indes den Fluidfluss vollständig zu unterbrechen.

Nach dem Abklingen des Druckstoßes fallen die Dichtkörper 13 unter der Wirkung der Schwerkraft selbsttätig in ihre in Fig. 1 gezeigte Ausgangsposition und die Vorrichtung 1 kehrt in ihren regulären Betriebszustand zurück, ohne dass hierzu weitere Maßnahmen, wie etwa dem Austausch von Bauteilen o.ä. erforderlich wären.

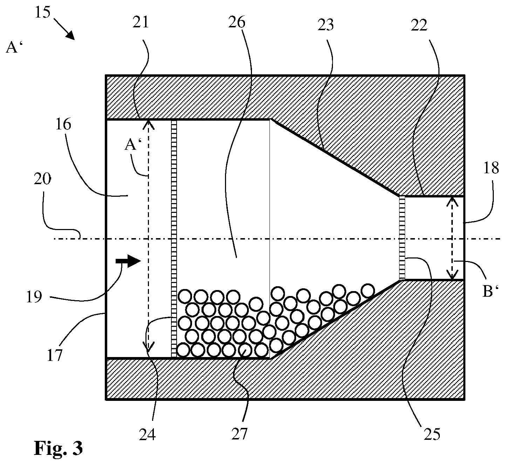

Fig. 3 zeigt eine Vorrichtung 15 mit einem Strömungsweg 16, der horizontal von einer Anströmöffnung 17 zu einer Abströmöffnung 18 verläuft. Im Betriebszustand der Vorrichtung 15 strömt das Fluid dabei in Richtung des Pfeils 19. Der Strömungsweg 16, der auch bei der Vorrichtung 15 drehsymmetrisch um eine Achse 20 angelegt ist, umfasst einen vorderen Abschnitt 21 mit größerem Querschnitt A' und einen hinteren Abschnitt 22 mit kleinerem Querschnitt B`, die über einen konisch verlaufenden Übergangsabschnitt 23 miteinander verbunden sind. Innerhalb des vorderen Abschnitts 21 ist ein erstes Halteelement 24 und innerhalb des hinteren Abschnitts 22 ein zweites Halteelement 25 jeweils senkrecht zur Strömungsrichtung, d.h. im Wesentlichen vertikal angeordnet. Die Halteelemente 24, 25 sind ähnlicher Weise wie die Haltelemente 10, 11 aufgebaut und besitzen jeweils eine gitter- oder siebartige Struktur, die den Fluidfluss durch den Strömungsweg 16 nicht oder nur unwesentlich beeinträchtigen. Die Halteelemente 24, 25 definieren im Strömungsweg 16 eine Haltekammer 26, in der eine Mehrzahl an Dichtkörpern 27 aufgenommen ist. Die beispielsweise kugelförmigen Dichtkörper 27 liegen innerhalb der Haltekammer 26 frei beweglich vor, sie sind jedoch so groß, dass sie nicht durch Öffnungen der gitter- oder siebartigen Haltelemente 24, 25 passen.

Im Ruhezustand oder im regulären Betriebszustand der Vorrichtung 15 liegen die Dichtkörper 27 aufgrund der Schwerkraft in einer dichten Packung in einem unteren Abschnitt der Haltekammer 26, wie in Fig. 3 gezeigt. Das Fluid strömt also überwiegend oberhalb der Dichtkörper 27 durch die Haltekammer 26. Kommt es dagegen zu einem plötzlichen Druckstoß in Richtung des Pfeils 19, werden die Dichtkörper 27 unter der Wirkung des Druckstoßes in Richtung des Halteelements 25 gedrückt (hier nicht gezeigt). Aufgrund des sich verengenden Strömungswegs im Übergangsabschnitt 23 kommt es in der Folge zu einer zumindest teilweisen Bedeckung des Halteelements 25 mit einer Packung aus Dichtkörpern 27, die die Wirkung des Druckstoßes abströmseitig zum Halteelement 25 mindern und auf diese Weise abströmseitig verbundene Armaturen schützen. Nach Abklingen des Druckstoßes fallen die Dichtkörper 27 unter der Wirkung der Schwerkraft in die in Fig. 3 gezeigte Ausgangsposition zurück und ermöglichen so wieder den ungehinderten Durchfluss des Fluids durch den Strömungsweg 16.

### Bezugszeichenliste

- 1: Vorrichtung
- 2: Strömungsweg
- 3: Anströmöffnung
- 4: Abströmöffnung
- 5: Pfeil
- 6: Achse
- 7: Unterer Abschnitt
- 8: Oberer Abschnitt
- 9: Übergangsabschnitt
- 10: Erstes Halteelement
- 11: Zweites Halteelement
- 12: Haltekammer
- 13: Dichtkörper
- 14: -
- 15: Vorrichtung
- 16: Strömungsweg
- 17: Anströmöffnung
- 18: Abströmöffnung
- 19: Pfeil
- 20: Achse
- 21: Vorderer Abschnitt
- 22: Hinterer Abschnitt
- 23: Übergangsabschnitt
- 24: Erstes Halteelement
- 25: Zweites Halteelement
- 26: Haltekammer
- 27: Dichtkörper
- A, A': Leitungsquerschnitt
- B, B': Leitungsquerschnitt

## Patentansprüche

1. Vorrichtung zum Begrenzen von Druckstößen in einem fluidführenden Rohrleitungssystem, mit einer eine Anströmöffnung (3, 17) und eine Abströmöffnung (4, 18) für das Fluid aufweisenden Haltekammer (12, 26), in dem ein Dichtkörper bewegbar aufgenommen ist, der in einem druckstoß- und saugstoßfreien Betriebszustand eine Freigabestellung einnimmt und eine Fluidströmung durch das fluidführende Rohrleitungssystem ermöglicht, im Falle eines Druckstoßes jedoch die Fluidströmung durch das fluidführende Rohrleitungssystem hemmt,
**dadurch gekennzeichnet,**
**dass** innerhalb der Haltekammer (12, 26) eine Mehrzahl an Dichtkörpern (13, 27) frei bewegbar aufgenommen ist und die Haltekammer (12, 26) von einem im Bereich der Anströmöffnung (3, 17) angeordneten ersten Haltelement (10, 24) sowie einem im Bereich der Abströmöffnung angeordneten zweiten Halteelement (11, 25) begrenzt wird, welche Halteelemente (10, 11, 24, 25) im Wesentlichen durchlässig für das Fluid, jedoch undurchlässig für die Dichtkörper (13, 27) ausgebildet sind.

2. Vorrichtung nach Anspruch 1, **dadurch gekennzeichnet, dass** das erste Halteelement (10, 24) eine größere Fläche als das zweite Halteelement (11, 25) aufweist und sich der Querschnitt der Haltekammer (12, 26) zwischen erstem Halteelement (10, 24) und zweitem Halteelement (11, 25), insbesondere konisch, verjüngt.

3. Vorrichtung nach Anspruch 1 oder 2, **dadurch gekennzeichnet, dass** die Haltekammer (12) in einem aufwärts gerichteten Abschnitt eines zwischen Anströmöffnung (3) und Abströmöffnung (4) verlaufenden Strömungswegs (2) angeordnet ist, wobei das zweite Halteelement (11) oberhalb des ersten Haltelements (10) angeordnet ist.

4. Vorrichtung nach Anspruch 1 oder 2, **dadurch gekennzeichnet, dass** ein in der Haltekammer (26) zwischen erstem Halteelement (24) und zweitem Haltelement (25) vorliegender Strömungsweg (16) im Wesentlichen horizontal verläuft.

5. Vorrichtung nach einem der vorhergehenden Ansprüche, **dadurch gekennzeichnet, dass** es sich bei den Dichtkörpern (13, 27) um Teile aus Metall, Kunststoff, Glas, Keramik oder einem Mineral handelt, die gleiche oder unterschiedliche Größe und/oder Geometrie aufweisen.

6. Vorrichtung nach einem der vorhergehenden Ansprüche, **dadurch gekennzeichnet, dass** Masse und Geometrie der Dichtkörper (13, 27) so gewählt sind, dass sie bei einer gleichmäßigen, druckstoßfreien Strömung von Fluid durch die Haltekammer (12, 26) maximal an der Grenze zu einem Schwebezustand sind.

7. Vorrichtung nach einem der vorhergehenden Ansprüche, **dadurch gekennzeichnet, dass** es sich bei den Halteelementen (10, 11, 24, 25) jeweils um ein Sieb, ein Netz ein Gitter oder ein Sinterfilter aus Metall, Kunststoff oder Keramik handelt.

8. Vorrichtung nach einem der vorhergehenden Ansprüche, **dadurch gekennzeichnet, dass** die Haltekammer (12, 26) in einem Gehäuse angeordnet ist, das lösbar mit dem Rohrleitungssystem verbunden ist.

9. Vorrichtung nach einem der vorhergehenden Ansprüche, **dadurch gekennzeichnet, dass** die Haltekammer (12, 26) in einer Armatur, beispielsweise in einem Ventil integriert ist.

## Claims

1. Device for limiting pressure surges in a fluid-carrying pipeline system, comprising a retaining chamber (12, 26), which has an inflow opening (3, 17) and an outflow opening (4, 18) for the fluid and which movably accommodates a sealing body, which assumes an enabling position in an operating state without a pressure surge or suction surge and enables a flow of fluid through the fluid-carrying pipeline system, but in the event of a pressure surge prevents the flow of fluid through the fluid-carrying pipeline system,
**characterized in that**
a plurality of sealing bodies (13, 27) are freely movably accommodated inside the retaining chamber (12, 26) and the retaining chamber (12, 26) is delimited by a first retaining element (10, 24) arranged in the region of the inflow opening (3, 17) and by a second retaining element (11, 25) arranged in the region of the outflow opening, which retaining elements (10, 11, 24, 25) are substantially permeable to the fluid, but impermeable to the sealing bodies (13, 27).

2. Device according to Claim 1, **characterized in that** the first retaining element (10, 24) has a larger surface area than the second retaining element (11, 25) and the cross section of the retaining chamber (12, 26) tapers, in particular conically, between the first retaining element (10, 24) and the second retaining element (11, 25).

3. Device according to Claim 1 or 2, **characterized in that** the retaining chamber (12) is arranged in an upwardly directed portion of a flow path (2) extending between the inflow opening (3) and the outflow opening (4), wherein the second retaining element (11) is arranged above the first retaining element (10).

4. Device according to Claim 1 or 2, **characterized in that** a flow path (16) present in the retaining chamber (26) between the first retaining element (24) and the second retaining element (25) extends substantially horizontally.

5. Device according to one of the preceding claims, **characterized in that** the sealing bodies (13, 27) are parts made of metal, plastic, glass, ceramic or another mineral, which have the same or different sizes and/or geometries.

6. Device according to one of the preceding claims, **characterized in that** the mass and geometry of the sealing bodies (13, 27) are selected such that they are on the verge of being in a suspended state in the event of a uniform flow of fluid through the retaining chamber (12, 26) without a pressure surge.

7. Device according to one of the preceding claims, **characterized in that** the retaining elements (10, 11, 24, 25) are each a screen, a mesh, a grille or a sintered filter made of metal, plastic or ceramic.

8. Device according to one of the preceding claims, **characterized in that** the retaining chamber (12, 26) is arranged in a housing which is detachably connected to the pipeline system.

9. Device according to one of the preceding claims, **characterized in that** the retaining chamber (12, 26) is integrated in a fitting, for example in a valve.

## Revendications

1. Dispositif destiné à limiter les coups de bélier dans un système de canalisations transportant un fluide, ledit dispositif comprenant une chambre de retenue (12, 26) qui comporte une ouverture d'entrée (3, 17) et une ouverture de sortie (4, 18) destinées au fluide et dans laquelle un corps d'étanchéité est reçu de manière mobile qui prend une position de libération dans un état de fonctionnement sans coup de bélier sous pression et dépression et qui permet l'écoulement de fluide à travers le système de canalisation transportant le fluide mais qui, en cas de coup de bélier, inhibe l'écoulement de fluide à travers le système de canalisation transportant le fluide,
**caractérisé en ce que**
une pluralité d'éléments d'étanchéité (13, 27) sont reçus de manière librement mobile à l'intérieur de la chambre de retenue (12, 26) et la chambre de retenue (12, 26) est limitée par un premier élément de retenue (10, 24), disposé dans la zone de l'ouverture d'entrée (3, 17), et un deuxième élément de retenue (11, 25) disposé dans la zone de l'ouverture de sortie, lesquels éléments de retenue (10, 11, 24, 25) laissent sensiblement passer le fluide, sans laisser passer le corps d'étanchéité (13, 27).

2. Dispositif selon la revendication 1, **caractérisé en ce que** le premier élément de retenue (10, 24) a une plus grande surface que le deuxième élément de retenue (11, 25) et la section transversale de la chambre de retenue (12, 26) entre le premier élément de retenue (10, 24) et le deuxième élément de retenue (11, 25) se rétrécit, notamment de manière conique.

3. Dispositif selon la revendication 1 ou 2, **caractérisé en ce que** la chambre de retenue (12) est disposée dans une portion dirigée vers le haut d'un chemin d'écoulement (2) qui s'étend entre l'ouverture d'entrée (3) et l'ouverture de sortie (4), le deuxième élément de retenue (11) étant disposé au-dessus du premier élément de retenue (10).

4. Dispositif selon la revendication 1 ou 2, **caractérisé en ce qu'**un chemin d'écoulement (16) présent dans la chambre de retenue (26) entre le premier élément de retenue (24) et le deuxième élément de retenue (25) s'étend sensiblement horizontalement.

5. Dispositif selon l'une des revendications précédentes, **caractérisé en ce que** les éléments d'étanchéité (13, 27) sont des pièces en métal, en matière synthétique, en verre, en céramique ou en une matière minérale, qui ont une taille et/ou une géométrie identique ou différente.

6. Dispositif selon l'une des revendications précédentes, **caractérisé en ce que** la masse et la géométrie des éléments d'étanchéité (13, 27) sont choisies de manière à être maximales à la limite d'un état de suspension lorsqu'un fluide s'écoule de manière uniforme et sans coup de bélier à travers la chambre de retenue (12, 26).

7. Dispositif selon l'une des revendications précédentes, **caractérisé en ce que** les éléments de retenue (10, 11, 24, 25) sont chacun formés par un tamis, un filet, une grille ou un filtre fritté en métal, en matière synthétique ou en céramique.

8. Dispositif selon l'une des revendications précédentes, **caractérisé en ce que** la chambre de retenue (12, 26) est disposée dans un boîtier qui est relié de manière amovible au système de canalisations.

9. Dispositif selon l'une des revendications précédentes, **caractérisé en ce que** la chambre de retenue (12, 26) est intégrée dans un robinet, par exemple dans une soupape.
